# EUROPÄISCHE PATENTSCHRIFT

(11) **EP 0 362 136 B1**
(45) Veröffentlichungstag und Bekanntmachung des Hinweises auf die Patenterteilung: **22.12.1993**
(21) Anmeldenummer: 89810709.9
(22) Anmeldetag: 19.09.1989
(51) Int. Cl.: C03C 8/18

(54) **Emailzusammensetzungen für Beschichtungen**
Enamel compositions for surface treatment
Compositions d'émail pour le traitement de surfaces

(30) Priorität: 28.09.1988 US 250460
(43) Veröffentlichungstag der Anmeldung: 04.04.1990
(73) Patentinhaber: CIBA-GEIGY AG, 4002 Basel (CH)
(72) Erfinder: Reinherz, Barry P., Lawrence, PA 15055 (US)

(56) Entgegenhaltungen:
- EP-A- 0 013 906
- EP-A- 0 198 150
- EP-A- 0 200 475
- EP-A- 0 326 519
- US-A- 4 306 012
- US-A- 4 649 062
- US-A- 4 684 388
- US-A- 4 684 389

## Beschreibung

Emailzusammensetzungen für Beschichtungen sind in Fachkreisen wohl bekannt. Solche Materialien können für verschiedene Applikationen Verwendung finden, werden aber vor allem zur Dekoration von Glasscheiben eingesetzt. Sie werden z.B. zur Bildung von Ränder um die Kanten von Glasscheiben, die zu Windschutzscheiben, Seitenfenstern und Heckscheiben von Kraftfahrzeugen verformt werden, eingesetzt.

Es ist allerdings beobachtet worden, dass wenn Glasscheiben, die mit den obenerwähnten Emailmaterialien gemäss dem Stand der Technik beschichtet sind, einer Verformung bei hohen Temperaturen unterworfen werden, die Beschichtungsmasse mit den die Gussform überziehenden Materialien zu verkleben neigt. Solche Emails sind also nicht geeignet für die Beschichtung von Glasscheiben, die einer Verformung durch Erhitzen in im allgemeinen mit Glasfasern überzogenen Gussformen unterworfen werden müssen.

Es sind verschiedene Lösungen vorgeschlagen worden. In der US-PS 4 596 590 wird der Zusatz eines Metalloxidpulvers, z.B. Fe-(II)-Oxid, zur Emailzusammensetzung als Antiklebmittel vorgeschlagen. Die US-PS 4 684 388 und die US-PS 4 684 389 schlagen ähnliche Lösungen vor: Die erstgenannte Patentschrift beschreibt den Zusatz von feinverteiltem metallischem Zinkpulver und feinverteiltem Sn-(II)-Oxid als Antiklebemittel und die zweitgenannte Patentschrift schlägt den Zusatz von feinverteiltem metallischem Zinkpulver mit demselben Zweck vor. Diese bekannten Zusätze führen wohl zu einer Verminderung der Verklebung, sie genügen aber den heutigen Anforderungen der Technik nicht ganz.

Es ist nun gefunden worden, dass überraschenderweise durch Zugabe von feinverteiltem Pulver bestimmter Metalle, wie Chrom, Mangan, Silicium und Tellur in Emailzusammensetzungen die obenerwähnten Probleme weitgehend vermieden werden. Die so erhaltenen Emailzusammensetzungen eignen sich sehr gut für den Ueberzug von Glasscheiben. Man erhält einen glatten, durchgehenden Ueberzug, der beim Erhitzen im Verformungsverfahren mit den die Gussform überziehenden Glasfasern nicht verklebt. Das Verformungsverfahren wird demnach durch die obenerwähnten Verklebungsvorgänge nicht behindert. Solche Emailzusammensetzungen zeichnen sich zusätzlich durch erhöhte Opazität und verbesserte Haftfähigkeit am Glas aus. Die Anwesenheit der erwähnten Metallpulver in UV-härtbaren Ueberzügen verhindert in beachtlichem Masse das Loslösen vom Email vom gläsernen Substrat.

Die vorliegende Erfindung betrifft demnach Emailzusammensetzungen enthaltend eine Glasfrittenzusammensetzung und ein dafür geeignetes Bindemittel, dadurch gekennzeichnet, dass sie zusätzlich 2-75 Gew.% eines feinverteilten Pulvers mit einer durchschnittlichen Partikelgrösse kleiner als 0,03 mm, mindestens eines Metalls ausgewählt aus Chrom, Mangan, Nickel, Silicium und Tellur, bezogen auf die gesamte Emailzusammensetzung, enthalten.

Die erfindungsgemässen Emailzusammensetzungen enthalten bevorzugt zusätzlich ein Metalloxidpigment.

Ein weiterer Gegenstand der Erfindung ist ein Verfahren zur Herstellung von beim Verformen in der Hitze nicht mit den die Gussform überziehenden Materialien verklebenden Emailzusammensetzungen enthaltend eine Glasfrittenzusammensetzung und ein dafür geeignetes Bindemittel, dadurch gekennzeichnet, dass zusätzlich 2-75 Gew.% eines feinverteilten Pulvers mit einer durchschnittlichen Partikelgrösse kleiner als 0,03 mm, mindestens eines Metalls ausgewählt aus Chrom, Mangan, Silicium und Tellur, bezogen auf die gesamte Emailzusammensetzung, eingearbeitet werden.

Jegliche weiche Glasfritte oder Glasfrittenmischung kann zur Herstellung der erfindungsgemässen Emailzusammensetzungen verwendet werden. Die Fritte wird so vermahlen, dass sie ein Sieb mit Maschenweite 0,03 mm durchlaufen kann. Die wichtigste Aufgabe der Fritte besteht darin, das pigmentäre Produkt auf der Glasoberfläche zu binden. Die Glasfrittenzusammensetzung kann verschiedene geeignete Metalloxidkombinationen enthalten. Typische Oxide sind z.B. die Oxide von Zink, Blei, Wismut, Silicium, Titan, Zirkon, Natrium, Bor, Lithium, Kalium, Calcium, Aluminium, Zinn, Magnesium u.a.m. Auch verschiedene Fluoride können in der Glasfritte enthalten sein. Die Zusammensetzung des Ansatzes an oxid- und fluoridbildenden Substanzen kann aus verschiedenen Salzen, wie z.B. Hydroxide, Carbonate, Sulfate, Nitrate, Fluoride der oben erwähnten Metalle bestehen. Die Ingredienzien werden so ausgewählt, dass sie zu bestimmten erwünschten Fritteneigenschaften führen. Blei-, Zink/Alkali- und Bismuth/Alkali-Borsilicat-Fritten und insbesondere Blei-Borsilicat-Fritten sind für den erfindungsgemässen Einsatz bevorzugt.

Die Glasfritten werden durch Vermischen der oxid- und gegebenenfalls fluoridbildenden Ingredienzen, Verschmelzen des erhaltenen Gemisches bei 900 bis 1600°C zu geschmolzenem Glas und Abschrecken des letzteren durch Eintauchen in Wasser oder Durchleiten im Gegenlauf in einem gekühlten Walzenstuhl hergestellt. Der Schmelzvorgang findet im allgemeinen in Keramik- oder Platintiegel oder in einem geeigneten Schmelzofen statt. Die erhaltenen Frittensplitter werden zu feinen Partikeln zermahlen.

Die gegebenenfalls und bevorzugt einzusetzenden Metalloxidpigmente sind den Fachleuten wohl bekannt, darunter z.B. die Oxide des Chroms, Kobalts, Eisens, Nickels, Kupfer und Mangans. Obwohl letztere die bevorzugten schwarzen Spinellpigmente bilden, können zur Erzeugung von dunkelgrau Tönen und anderen Farben auch andere Metalloxide verwendet werden. Besonders bevorzugt werden Eisenspinellpigmente.

Je nach der Verwendung werden verschiedene Bindemittel ausgewählt. Es ist wesentlich, dass das Bindemittel die Frittenpartikel hinreichend suspendiert und dass er beim Einbrennen der Emailzusammensetzung vollständig ausbrennt. Zweckmässig handelt es sich um organische Bindemittel, wie z.B. Bindemittel auf Fichtenöl-Basis, pflanzliche Oele, Mineralöle, niedermolekulare Erdölfraktionen und Tridecylalkohol. Die Bindemittel können auch z.B. durch zähflüssige Harze, wie Vinylharze, durch Lösungsmittel oder Filmbildner, wie Cellulosematerialien modifiziert werden.

UV-härtbare Bindemittel eignen sich ebenfalls für den Einsatz gemäss der vorliegenden Erfindung. Solche UV-härtbare Bindemittel die in Fachkreisen wohl bekannt sind, setzen sich im allgemeinen aus polymerisierbaren Monomeren und/oder Oligomeren, die z.B. Acrylat- oder Methacrylat-Gruppen enthalten, und Photoiniziatoren sowie polymerisationshemmende Mittel zusammen. Geeignete Systeme dieser Art sind z.B. in den US-PS 4 306 012 und 4 649 062 beschrieben. Solche Systeme werden durch UV-Strahlung nach dem Aufbringen auf das Glassubstrat gehärtet.

Die erfindungsgemässen Emailzusammensetzungen (Teig) enthalten 2-75 Gew.%, bevorzugt 5-35 Gew.% des oben definierten Metallpulvers, 10-85 Gew.%, bevorzugt 30-65 Gew.% Glasfritten-Zusammensetzung und 10-45 Gew.%, bevorzugt 14-30 Gew.% Bindemittel, bezogen auf die gesamte Emailzusammensetzung. Die gegebenenfalls einzusetzende Pigmentkomponente besteht aus 10-40 Gew.%, bezogen auf die Glasfritte, eines kombinierten Systems einiger der obenerwähnten Metalloxiden. Die erhaltenen Emailzusammensetzungen sind zähflüssig, wobei die Viskosität je nach Zusammensetzung und Applikation variieren kann. Für das Auftragen mittels Siebdruck sind Viskositäten von 10000-80000, bevorzugt von 20000-65000 Centipoise bei 20°C, mit Brookfield-Viskosimeter (Spindel Nr. 7 bei 20 U/Min.) ermittelt, geeignet.

Eine ganze Reihe von fakultativen Ingredienzien kann der erfindungsgemässen Emailzusammensetzung noch zugesetzt werden. Diese können zu Pigmentierungszwecken, um die Viskosität zu beeinflussen oder um bestimmte Eigenschaften, wie Haftvermögen und Abreibfestigkeit, zu verbessern zugegeben werden. Bismuth und Bismuth enthaltende Verbindungen erhöhen das Haftvermögen. Bestimmte feuerfeste Stoffe, wie z.B. ZrO₂, verbessern die Abriebfestigkeit. Verbindungen auf Kieselsäure-Basis dienen zur Einstellung der Viskosität. Weiter können auch Suspensionsmittel, wie z.B. Isostearinsäure, zugesetzt werden.

Besonders bevorzugte Emailzusammensetzungen enthalten eine Blei-Borsilicat-Fritte, ein Eisenspinellpigment, eines der oben definierten feinverteilten Metallpulver und ein Bindemittel auf Fichtenöl-Basis.

Die erfindungsgemässen Emailzusammensetzungen werden wie folgt hergestellt: Nach dem Vermischen der Feststoffe werden die flüssigen Ingredienzien zugegeben und das Gemisch gründlich bis zur Bildung eines homogenen dickflüssigen Teigs vermischt oder geknetet. Der Teig wird anschliessend noch weiter dispergiert mittels üblicher Mühlen oder Dispergiergeräten.

Die Methoden zur Applikation der Emailüberzüge sind in Fachkreisen wohl bekannt. Die dispergierten Ueberzugsmassen können nach bekannten Beschichtungsverfahren, wie z.B. Siebdruck, Spritzen, Streichen und Walzenauftrag appliziert werden. Für die Beschichtung von Glaswaren wird der Siebdruck bevorzugt.

Wenn die Glasscheibe mit dem Email beschichtet ist, wird sie auf eine zur Einweichung des Glases genügende Temperatur erhitzt, so dass die Glasscheibe in die gewünschte Form gebracht werden kann. Die Erweichungstemperatur variiert im allgemeinen zwischen 600 und 760°C. Emails, die dank ihrer Zusammensetzung UV-strahlungsempfindlich sind, können einer solchen Strahlung vor dem Erhitzen zur Fixierung des Emails an der Glasscheibe ausgesetzt werden. Nach dem Erhitzen wird die Glasscheibe mit dem Emailüberzug in die mit Glasfasern bezogene Gussform eingeschoben und erhält in dieser Weise die gewünschte Form. Beim Erhitzen werden selbstverständlich alle im Email enthaltenen organischen Materialien vollständig ausgebrannt und der restliche Anteil der Emailzusammensetzung wird an das Glas dauerhaft gebunden. Durch den erfindungsgemässen Zusatz des Metallpulvers zum Email wird einerseits die Verklebung des Emails mit der Gussform vermieden und andererseits einen glatten durchgehenden Emailüberzug gewährleistet.

Nachdem die mit Email überzogene Glasscheibe von der Gussform entfernt worden ist, wobei keine Verklebung des Emails mit der Gussform festzustellen ist, kann die Glasscheibe durch Abkühlen endgültig in der gewünschten Form verfestigt werden. Normalerweise geschieht dies entweder durch schnelles Abkühlen in einem Glastemperverfahren oder durch Ausglühen (insbesondere wenn das Produkt für die Applikation in Windschutzscheiben vorgesehen ist). Man erhält ein Produkt, das ohne weiteres für verschiedene Applikationen geeignet ist, insbesondere für den obenerwähnten Einsatz in Kraftfahrzeugen.

Ein weiterer Gegenstand der vorliegenden Erfindung ist demnach ein Verfahren zur Herstellung einer mit Email beschichteten geformten Glasscheibe, dadurch gekennzeichnet, dass ein feinverteiltes Pulver mindestens eines Metalls ausgewählt aus Chrom, Chromcarbid, Kobalt, Kupfer, Mangan, rostfreiem Stahl, Nickel, Silicium, Zinn, Titan, Wolfram und Tellur enthaltende Emailzusammensetzung gemäss obiger Beschreibung, auf eine Glasplatte aufgetragen wird, die beschichtete Glasplatte aufgeheizt wird um die Glasplatte zu erweichen, die flüchtigen Anteile der Emailzusammensetzung zu entfernen und die Emailzusammensetzung dauerhaft an das Glas zu binden, die erweichte Glasplatte mit dem Emailüberzug zur Formgebung in eine mit Glasfasern bezogene Gussform eingeschoben, dann wieder entfernt und schliesslich abgekühlt wird.

Zu Emailzusammensetzungen kann, zur Erzeugung von elektrisch leitenden Ueberzügen, wie beispielsweise in Heckscheibenheizsystemen von Kraftfahrzeugen, auch Silber-Metall beigemengt werden. Für solche Anwendungen sind bestimmte Eigenschaften, wie Farbstabilität, Haftfestigkeit, Lötbarkeit, Ausbleiben von Silbermigration und Abriebfestigkeit, unerlässlich. Die erfindungsgemässen Metallpulver enthaltenden Emailzusammensetzungen eignen sich ganz besonders zur Verwendung in Kombination mit solchen leitenden Beschichtungen, da sie in derartigen Systemen die obenerwähnten erforderlichen Eigenschaften gewährleisten.

Die folgenden Beispiele erläutern die Erfindung. Teile bedeuten dabei Gewichtsteile, wenn nicht anders definiert.

Beispiel 1: Mit jedem der in der nachfolgenden Tabelle 1 aufgeführten Metallpulver wird ein Email folgender Zusammensetzung hergestellt:

| | |
|---|---|
| Emailpulver* | 3,6 Teile |
| Bindemittel auf Fichtenölbasis | 1,35 Teile |
| Metallpulver** | 1,4 Teile |

| | |
|---|---|
| * 58 Teile Blei-Aluminium-Borsilicat-Fritte 42 Teile Eisenspinell-Pigmentmischung | |
| ** Die Metallpulver werden wenn nötig zuvor einer gründlichen Mahlung unterworfen, um eine kleinere durchschnittliche Partikelgrösse als 0,03 mm zu erreichen. | |

Die Emails werden nach üblichen Methoden durch Vermischen der flüssigen und festen Anteile und anschliessende Dispergierung des Teigs in einer geeigneten Mühle hergestellt.

Die Emails werden wie folgt geprüft: Sie werden auf Glasplättchen (Objektträger) aufgetragen und 15 Minuten auf 705°C erhitzt. Ein leicht gebogener, mit einem Keramikgewebe überzogener Pressbarren wird mit einem geschätzten Druck von 11-23 kg (20-50 Pounds) während 5 Sekunden mittels einer Rollbewegung auf der erweichten Glasplatte gepresst. Dann wird das Ausmass der Verklebung zwischen Email und Keramikgewebe visuell bestimmt. Die Bewertung mit Note "0" bedeutet keine Verklebung, "1" geringe Verklebung, "2" merkliche Verklebung und "3" beachtliche Verklebung. Zudem werden auch die Farbe und das Fehlen von Porosität durch Untersuchung der Glasplättchen-Rückseite visuell bestimmt. Auch die Oberflächenbeschaffenheit der Beschichtung wird visuell bestimmt.

Die Resultate sind in der nachfolgenden Tabelle wiedergegeben.

| Metall | Verklebung | Farbe | Beschaffenheit |
|---|---|---|---|
| Chrom | 0 | schwarz | matt schwarz |
| Silicium | 0 | grau-schwarz | matt schwarz |
| Mangan | 0 | schwarz | matt grau-schwarz |
| Tellur | 0 | rauchig braun | glatt grau-schwarz |

Alle Proben sind bezüglich Fehlen von Porosität ausgezeichnet.

## Patentansprüche (Patentansprüche für folgende(n) Vertragsstaat(en): DE, FR, GB, IT, NL)

1. Emailzusammensetzungen enthaltend eine Glasfrittenzusammensetzung und ein dafür geeignetes Bindemittel, dadurch gekennzeichnet, dass sie zusätzlich 2-75 Gew.% eines feinverteilten Pulvers mit einer durchschnittlichen Partikelgrösse kleiner als 0,03 mm mindestens eines Metalls ausgewählt aus Chrom, Mangan, Silicium und Tellur, bezogen auf die gesamte Emailzusammensetzung, enthalten.

2. Emailzusammensetzungen gemäss Anspruch 1, dadurch gekennzeichnet, dass die Glasfrittenzusammensetzung aus einer Kombination von Metalloxiden besteht.

3. Emailzusammensetzungen gemäss Anspruch 2, dadurch gekennzeichnet, dass die Metalloxide aus der Gruppe bestehend aus Zink, Blei, Wismut, Silicium, Titan, Zirkon, Natrium, Bor, Lithium. Kalium, Calcium, Aluminium, Zinn und Magnesium ausgewählt sind.

4. Emailzusammensetzungen gemäss Anspruch 2, dadurch gekennzeichnet, dass die Glasfritte eine Blei-Borsilicat-Fritte ist.

5. Emailzusammensetzungen gemäss Anspruch 1, dadurch gekennzeichnet, dass sie ein organisches Bindemittel enthalten.

6. Emailzusammensetzungen gemäss Anspruch 5, dadurch gekennzeichnet, dass das organische Bindemittel ein Bindemittel auf Fichtenöl-Basis, ein pflanzliches Oel, ein Mineralöl, eine niedermolekulare Erdölfraktion oder ein Bindemittel auf Tridecylalkohol-Basis ist.

7. Emailzusammensetzungen gemäss Anspruch 5, dadurch gekennzeichnet, dass das organische Bindemittel ein Bindemittel auf Fichtenöl-Basis ist.

8. Emailzusammensetzungen gemäss Anspruch 1, dadurch gekennzeichnet, dass sie zusätzlich ein Metalloxidpigment enthalten.

9. Emailzusammensetzungen gemäss Anspruch 8, dadurch gekennzeichnet, dass das Metalloxidpigment ein Eisenspinellpigment ist.

10. Emailzusammensetzungen gemäss Anspruch 1, dadurch gekennzeichnet, dass sie eine Blei-Borosilicat-Fritte, ein Eisenspinellpigment, ein feinverteiltes Metallpulver und ein Bindemittel auf Fichtenöl-Basis enthalten.

11. Emailzusammensetzhungen gemäss Anspruch 1, dadurch gekennzeichnet, dass das Bindemittel UV-härtbar ist.

12. Ein mit einer Emailzusammensetzung gemäss Anspruch 1 partiell beschichtetes Glassubstrat.

13. Glassubstrat gemäss Anspruch 12, dadurch gekennzeichnet, dass die Emailzusammensetzung zusätzlich ein Metalloxidpigment enthält.

14. Verfahren zur Herstellung von beim Verformen in der Hitze nicht mit den die Gussform überziehenden Materialien verklebenden Emailzusammensetzungen enthaltend eine Glasfrittenzusammensetzung und ein dafür geeignetes Bindemittel, dadurch gekennzeichnet, dass zusätzlich 2-75 Gew.% eines feinverteilten Pulvers mit einer durchschnittlichen Partikelgrösse kleiner als 0,03 mm mindestens eines Metalls ausgewählt aus Chrom, Mangan, Silicium und Tellur, bezogen auf die gesamte Emailzusammensetzung, eingearbeitet werden.

15. Verfahren gemäss Anspruch 14, dadurch gekennzeichnet, dass die Emailzusammensetzungen zusätzlich ein Metalloxidpigment enthalten.

16. Verfahren zur Herstellung einer mit Email beschichteten geformten Glasscheibe, dadurch gekennzeichnet, dass eine Emailzusammensetzung gemäss Anspruch 1 auf eine Glasplatte aufgetragen wird, die beschichtete Glasplatte aufgeheizt wird um die Glasplatte zu erweichen, die flüchtigen Anteile der Emailzusammensetzung zu entfernen und die Emailzusammensetzung dauerhaft an das Glas zu binden, die erweichte Glasplatte mit dem Emailüberzug zur Formgebung in eine mit Glasfasern bezogene Gussform eingeschoben, dann wieder entfernt und schliesslich abgekühlt wird.

## Patentansprüche (Patentansprüche für folgende(n) Vertragsstaat(en): ES)

1. Verfahren zur Herstellung von beim Verformen in der Hitze nicht mit den die Gussform überziehenden Materialien verklebenden Emailzusammensetzungen enthaltend eine Glasfrittenzusammensetzung und ein dafür geeignetes Bindemittel, dadurch gekennzeichnet, dass zusätzlich 2-75 Gew.% eines feinverteilten Pulvers mit einer durchschnittlichen Partikelgrösse kleiner als 0,03 mm mindestens eines Metalls ausgewählt aus Chrom, Mangan, Silicium und Tellur, bezogen auf die gesamte Emailzusammensetzung, eingearbeitet werden.

2. Verfahren gemäss Anspruch 1, dadurch gekennzeichnet, dass die Glasfrittenzusammensetzung aus einer Kombination von Metalloxiden besteht.

3. Verfahren gemäss Anspruch 2, dadurch gekennzeichnet, dass die Metalloxide aus der Gruppe bestehend aus Zink, Blei, Silicium, Titan, Zirkon, Natrium, Bor, Lithium, Kalium, Calcium, Aluminium, Zinn, Vanadium, Molybden, Magnesium, Eisen und Mangan ausgewählt sind.

4. Verfahren gemäss Anspruch 3, dadurch gekennzeichnet, dass die Glasfritte eine Blei-Borsilicat-Fritte ist.

5. Verfahren gemäss Anspruch 1, dadurch gekennzeichnet, dass ein organisches Bindemittel verwendet wird.

6. Verfahren gemäss Anspruch 5, dadurch gekennzeichnet, dass das organische Bindemittel ein Bindemittel auf Fichtenöl-Basis, ein pflanzliches Oel, ein Mineralöl, eine niedermolekulare Erdölfraktion oder ein Bindemittel auf Tridecylalkohol-Basis ist.

7. Verfahren gemäss Anspruch 6, dadurch gekennzeichnet, dass das organische Bindemittel ein Bindemittel auf Fichtenöl-Basis ist.

8. Verfahren gemäss Anspruch 1, dadurch gekennzeichnet, dass die Emailzusammensetzungen zusätzlich ein Metalloxidpigment enthalten.

9. Verfahren gemäss Anspruch 1, dadurch gekennzeichnet, dass das Metalloxidpigment ein Eisenspinellpigment ist.

10. Verfahren gemäss Anspruch 1, dadurch gekennzeichnet, dass das Bindemittel UV-härtbar ist.

11. Verfahren zur Herstellung einer mit Email beschichteten geformten Glasscheibe, dadurch gekennzeichnet, dass eine nach dem Verfahren gemäss Anspruch 1 hergestellte Emailzusammensetzung auf eine Glasplatte aufgetragen wird, die beschichtete Glasplatte aufgeheizt wird um die Glasplatte zu erweichen, die flüchtigen Anteile der Emailzusammensetzung zu entfernen und die Emailzusammensetzung dauerhaft an das Glas zu binden, die erweichte Glasplatte mit dem Emailüberzug zur Formgebung in eine mit Glasfasern bezogene Gussform eingeschoben, dann wieder entfernt und schliesslich abgekühlt wird.

12. Verfahren gemäss Anspruch 11, dadurch gekennzeichnet, dass die Emailzusammensetzung zusätzlich ein Metalloxidpigment enthält.

## Claims (Claims for the following Contracting State(s): DE, FR, GB, IT, NL)

1. An enamel composition comprising a glass frit composition and a binder suitable therefor, which additionally contains 2-75% by weight of a finely divided powder having an average particle size of less than 0.03 mm of at least one metal selected from the group consisting of chromium, manganese, silicon and tellurium, based on the entire enamel composition.

2. An enamel composition according to claim 1, wherein the glass frit composition consists of a combination of metal oxides.

3. An enamel composition according to claim 2, wherein the metal oxides are selected from the group consisting of zinc, lead, bismuth, silicon, titanium, zirconium, sodium, boron, lithium, potassium, calcium, aluminium, tin and magnesium oxides.

4. An enamel composition according to claim 2, wherein the glass frit is a lead borosilicate frit.

5. An enamel composition according to claim 1, which contains an organic binder.

6. An enamel composition according to claim 5, wherein the organic binder is a binder based on pine oil, a vegetable oil, a mineral oil, a low molecular weight petroleum fraction or a binder based on tridecyl alcohol.

7. An enamel composition according to claim 5, wherein the organic binder is a binder based on pine oil.

8. An enamel composition according to claim 1, which additionally contains a metal oxide pigment.

9. An enamel composition according to claim 8, wherein the metal oxide pigment is an iron spinel pigment.

10. An enamel composition according to claim 1, which contains a lead borosilicate frit, an iron spinel pigment, a finely divided metal powder and a binder based on pine oil.

11. An enamel composition according to claim 1, wherein the binder is UV-curable.

12. A glass substrate partially coated with an enamel composition according to claim 1.

13. A glass substrate according to claim 12, wherein the enamel composition additionally contains a metal oxide pigment.

14. A process for producing an enamel composition comprising a glass frit composition and a binder suitable therefor, which on deformation under heat does not adhere to the materials covering the casting mould, which process comprises additionally incorporating 2-75% by weight of a finely divided powder having an average particle size of less than 0.03 mm of at least one metal selected from the group consisting of chromium, manganese, silicon and tellurium, based on the entire enamel composition.

15. A process according to claim 14, wherein the enamel composition additionally contains a metal oxide pigment.

16. A process for producing an enamel-coated moulded glass sheet, wherein an enamel composition according to claim 1 is coated onto a glass sheet, the coated glass sheet is heated to soften the glass sheet, to remove the volatile constituents in the enamel composition and to bond the enamel composition permanently to the glass, the softened glass sheet having the enamel coating is pushed into a casting mould covered with glass fibres for shaping, then removed again and finally cooled.

## Claims (Claims for the following Contracting State(s): ES)

1. A process for producing an enamel composition comprising a glass frit composition and a binder suitable therefor, which on deformation under heat does not adhere to the materials covering the casting mould, which process comprises additionally incorporating 2-75% by weight of a finely divided powder having an average particle size of less than 0.03 mm of at least one metal selected from the group consisting of chromium, manganese, silicon and tellurium, based on the entire enamel composition.

2. A process according to claim 1, wherein the glass frit composition consists of a combination of metal oxides.

3. A process according to claim 2, wherein the metal oxides are selected from the group consisting of zinc, lead, silicon, titanium, zirconium, sodium, boron, lithium, potassium, calcium, aluminium, tin, vanadium, molybdenum, magnesium, iron and manganese oxides.

4. A process according to claim 3, wherein the glass frit is a lead borosilicate frit.

5. A process according to claim 1, wherein an organic binder is used.

6. A process according to claim 5, wherein the organic binder is a binder based on pine oil, a vegetable oil, a mineral oil, a low molecular weight petroleum fraction or a binder based on tridecyl alcohol.

7. A process according to claim 6, wherein the organic binder is a binder based on pine oil.

8. A process according to claim 1, wherein the enamel composition additionally contains a metal oxide pigment.

9. A process according to claim 1, wherein the metal oxide pigment is an iron spinel pigment.

10. A process according to claim 1, wherein the binder is UV-curable.

11. A process for producing an enamel-coated moulded glass sheet, wherein an enamel composition produced by the process according to claim 1 is coated onto a glass sheet, the coated glass sheet is heated to soften the glass sheet, to remove the volatile constituents in the enamel composition and to bond the enamel composition permanently to the glass, the softened glass sheet having the enamel coating is pushed into a casting mould covered with glass fibres for shaping, then removed again and finally cooled.

12. A process according to claim 11, wherein the enamel composition additionally contains a metal oxide pigment.

## Revendications (Revendications pour l'(les) Etat(s) contractant(s) suivant(s): DE, FR, GB, IT, NL)

1. Compositions d'émail comportant une composition de fritté de verre et un liant approprié à ce fritté, caractérisées en ce qu'elles comportent en plus de 2 à 75% en poids d'une poudre finement divisée, dont la dimension moyenne des particules est inférieure à 0,03 mm, d'au moins un métal choisi parmi le chrome, le manganèse, le silicium, et le tellure, la quantité étant déterminée par rapport à la composition totale d'émail.

2. Compositions d'émail selon la revendication 1, caractérisées en ce que la composition de fritté de verre est constituée d'une combinaison d'oxydes métalliques.

3. Compositions d'émail selon la revendication 2, caractérisées en ce que les oxydes métalliques sont choisis dans le groupe constitué par le zinc, le plomb, le bismuth, le silicium, le titane, le zirconium, le sodium, le bore, le lithium, le potassium, le calcium, l'aluminium, l'étain et le magnésium.

4. Compositions d'émail selon la revendication 2, caractérisées en ce que le fritté de verre est un fritté de borosilicate de plomb.

5. Compositions d'émail selon la revendication 1, caractérisées en ce qu'elles comportent un liant organique.

6. Compositions d'émail selon la revendication 5, caractérisées en ce que le liant organique est un liant à base d'huile de sapin, une huile végétale, une huile minérale, une fraction de pétrole à bas poids moléculaire ou un liant à base d'alcool tridécylique.

7. Compositions d'émail selon la revendication 5, caractérisées en ce que le liant organique est un liant à base d'huile de sapin.

8. Compositions d'émail selon la revendication 1, caractérisées en ce qu'elles comportent en outre un pigment d'oxyde métallique.

9. Compositions d'émail selon la revendication 8, caractérisées en ce que le pigment d'oxyde métallique est un pigment de spinelle de fer.

10. Compositions d'émail selon la revendication 1, caractérisées en ce qu'elles comportent un fritté de borosilicate de plomb, un pigment de spinelle de fer, une poudre métallique finement divisée et un liant à base d'huile de sapin.

11. Compositions d'émail selon la revendication 1, caractérisées en ce que le liant est durcissable aux UV.

12. Substrat de verre revêtu partiellement d'une composition d'émail selon la revendication 1.

13. Substrat de verre selon la revendication 12 caractérisé en ce que la composition d'émail comporte en outre un pigment d'oxyde métallique.

14. Procédé pour préparer des compositions d'émail comportant une composition de fritté de verre et un liant approprié pour cette composition de fritté, cette composition d'émail ne collant pas avec les matières qui recouvrent le moule de fonte, lors de la mise en forme à chaud, ce procédé étant caractérisé en ce que l'on introduit en outre dans cette composition, de 2 à 75% en poids d'une poudre finement divisée, ayant une dimension de particules inférieure à 0,03 mm, d'au moins un métal choisi parmi le chrome, le manganèse, le silicium et le tellure, la quantité étant déterminée par rapport à la composition totale d'émail.

15. Procédé selon la revendication 14, caractérisé en ce que les compositions d'émail conportent en outre un pigment d'oxyde métallique.

16. Procédé pour préparer une plaque de verre mise en forme et recouverte d'émail, caractérisé en ce que l'on applique une composition d'émail conforme à la revendication 1 sur une plaque de verre, on chauffe la plaque de verre recouverte pour la ramollir, pour éliminer les parties volatiles de la composition d'émail et pour lier de façon permanente la composition d'émail sur le verre, on introduit la plaque de verre ramollie, avec le revêtement d'émail, dans un moule de fonte revêtu de fibres de verre pour la mettre en forme, puis on l'éloigne et enfin on la refroidit.

## Revendications (Revendications pour l'(les) Etat(s) contractant(s) suivant(s): ES)

1. Procédé pour préparer par mise en forme à la chaleur des compositions d'émail qui ne collent pas avec les matières qui recouvrent un moule de fonte, ces compositions comportant une composition de fritté de verre et un liant adapté à cette composition, le procédé étant caractérisé en ce que l'on incorpore en outre de 2 à 75 % en poids d'une poudre finement divisée, ayant une dimension moyenne des particules inférieure à 0,03 mm, d'au moins un métal choisi parmi le chrome, le manganèse, le silicium et le tellure, cette quantité étant déterminée par rapport à la composition totale d'émail.

2. Procédé selon la revendication 1, caractérisé en ce que la composition de fritté de verre est constituée d'une combinaison d'oxydes métalliques.

3. Procédé selon la revendication 2, caractérisé en ce que les oxydes métalliques sont choisis dans le groupe constitué par le zinc, le plomb, le silicium, le titane, le zirconium, le sodium, le bore, le lithium, le potassium, le calcium, l'aluminium, l'étain , le vanadium, le molybdène, le magnésium, le fer et le manganèse.

4. Procédé selon la revendication 3, caractérisé en ce que le fritté de verre est un fritté de borosilicate de plomb.

5. Procédé selon la revendication 1, caractérisé en ce que l'on utilise un liant organique.

6. Procédé selon la revendication 5, caractérisé en ce que le liant organique est un liant à base d'huile de sapin, une huile végétale, une huile minérale, une fraction de pétrole à bas poids moléculaire ou un liant à base d'alcool tridécylique.

7. Procédé selon la revendication 6, caractérisé en ce que le liant organique est un liant à base d'huile de sapin.

8. Procédé selon la revendication 1, caractérisé en ce que les compositions d'émail contiennent en outre un pigment d'oxyde métallique.

9. Procédé selon la revendication 1, caractérisé en ce que le pigment d'oxyde métallique est un pigment de spinelle de fer.

10. Procédé selon la revendication 1, caractérisé en ce que le liant est durcissable aux UV.

11. Procédé pour préparer une plaque de verre recouverte d'émail et mise en forme, caractérisé en ce que l'on applique sur une plaque de verre une composition d'émail préparée selon le procédé conforme à la revendication 1, on chauffe la plaque enduite pour ramollir la plaque de verre, pour éliminer les parties volatiles de la composition d'émail, et pour lier de façon permanente la composition d'émail sur le verre, on introduit la plaque ramollie de verre, avec le revêtement d'émail, dans un moule de fonte revêtu de fibres de verre, pour la mettre en forme, puis on l'enlève et enfin on la refroidit.

12. Procédé selon la revendication 11, caractérisé en ce que la composition d'émail contient en outre un pigment d'oxyde métallique.
